# EUROPEAN PATENT SPECIFICATION

(11) **EP 1 949 309 B1**
(45) Date of publication and mention of the grant of the patent: **15.01.2014**
(21) Application number: 06826504.0
(22) Date of filing: 23.10.2006
(51) Int. Cl.: G06K 19/077, H02J 17/00, H01Q 1/24, H01Q 1/22, H01Q 5/00

(54) **SYSTEMS AND METHODS FOR RECEIVING AND MANAGING POWER IN WIRELESS DEVICES**
SYSTEME UND VERFAHREN ZUM EMPFANGEN UND VERWALTEN VON STROM IN DRAHTLOSEN GERÄTEN
SYSTEMES ET PROCEDES POUR LA RECEPTION ET LA GESTION D'ENERGIE DANS DES DISPOSITIFS SANS FIL

(30) Priority: 21.10.2005 US 729378 P; 17.01.2006 US 760040 P
(43) Date of publication of application: 30.07.2008
(73) Proprietor: The Regents of the University of Colorado, Boulder, CO 80309 (US)
(72) Inventor: ZANE, Regan, Superior, CO (US); POPOVIC, Zoya, Boulder, CO 80303 (US); SHARP, Andrew, Lyons, CO 80540 (US); RESTREPO, Diego, Littleton, CO 80127 (US)
(74) Representative: Curley, Donnacha John
(86) International application number: PCT/US2006/041355
(87) International publication number: WO 2007/048052

(56) References cited:
- JP-A- 2004 088 443
- US-A- 5 068 669
- US-A- 5 719 586
- US-B1- 6 243 013

## Description

### RELATED APPLICATIONS

This application claims priority to US Provisional Patent Application Serial Number 60/729,378 filed October 21, 2005, and US Provisional Patent Application Serial Number 60/760,040, filed January 17, 2006.

### BACKGROUND

Sensors and transmitters that are small and require low levels of power for operation are frequently used for collecting information without being intrusive to their operating environment. For example, a battery powered sensing and transmitting device may be surgically implanted within living tissue to sense and transmit characteristics of the body in which it is implanted.

The lifetime of the battery used within such a sensor often requires additional surgical procedures to periodically replace the battery. Similarly, where a sensor and transmitting device is located within controlled or hazardous environments, it is often a time-consuming and expensive task to periodically replace the battery.

Energy may be harvested from radio frequency ("RF") waves for use in remote sensors and transmitting devices. One example of this functionality is an RF identification ("RFID") tag that derives power from an RF wave (e.g., from a transmitting device operating to read the RFID tag) and uses that power to transmit an identification signal. One drawback of this technology is that the RFID tags typically only operate over short distances.

A rectenna is an antenna that includes a rectifier; the rectenna receives RF waves, rectifies the waves and produces direct current ("DC") electricity. The DC electricity produced by the rectenna is dependent on rectenna design, RF wave frequency, RF wave polarization and RF wave power level incident at the rectenna. Typically, the DC electricity output from the rectenna is conditioned by conditioning electronics before being fed to a powered device (e.g., sensor, microprocessor, transmitter etc.). Where characteristics of the RF wave vary, the DC electricity output from the rectenna also varies; this affects power conversion efficiency due to loading upon the rectenna by the conditioning electronics which attempts to maintain a constant power output for the powered device.

US5068669 discloses a system and method for power beaming energy from a source at high frequencies and rectifying such energy to provide a source of DC energy is disclosed. The system operates at a frequency of at least 10 GHz and incorporates a rectenna array having a plurality of rectenna structures that utilize circuit elements formed with microstrip circuit techniques.

US5719586 introduces an RFID system that comprises a two-dimensional antenna configuration having a dipole in combination with a loop antenna or a second dipole with their dipole axes at approximately a 90 DEG angle to one another. The pattern of two dipole antennas combined with the pattern of a single loop antenna, allows the sequential combination of the patterns to represent a nearly spherical antenna pattern in three dimensions, while the antennas reside in a two-dimensional plane.

### SUMMARY

Accordingly the present application provides a reconfigurable radio frequency (RF) reception device in accordance with the claims which follow.

### BRIEF DESCRIPTION OF THE FIGURES

FIG. 1 shows a power harvesting system that includes power sources and a controlled impedance, voltage or current power controller.

FIG. 2 shows one exemplary periodic and uniform rectenna array.

FIG. 3 shows one exemplary aperiodic and non-uniform rectenna array.

FIG. 4 illustrates exemplary energy coupling including a plurality of DC-to-DC converters.

FIG. 5 is a flowchart illustrating one exemplary process for converting variable power DC electricity into usable DC electricity.

FIG. 6 is a flowchart illustrating one process for designing a system for harvesting energy from a power source.

FIG. 7 is a flowchart illustrating one process for designing a rectenna.

FIG. 8 is a flowchart illustrating another exemplary process for designing a rectenna.

FIG. 9 is a flowchart illustrating one exemplary process for designing a system for harvesting energy from power sources.

FIG. 10 shows one exemplary block diagram of one exemplary rectenna and sensor system.

FIG. 11 shows an exemplary model and a layout of a rectenna.

FIG. 12 shows an exemplary graph illustrating simulated and measured output power of the rectenna of FIG. 11 as a function of output resistance, and an exemplary graph illustrating simulated and measured output voltage of the rectenna of FIG. 11 as a function of output resistance.

FIG. 13 shows a block diagram illustrating one exemplary DC power processing circuit for obtaining plus and minus 15V power.

FIG. 14 shows one exemplary graph illustrating measured DC output power of the circuit of FIG. 13 against polarization angle of radiation incident on the rectenna array and one exemplary graph illustrating DC output power and efficiency of the circuit of FIG. 13 against power received by the rectenna array

FIG. 15 shows one exemplary circuit for a boost converter in variable frequency critical conduction mode (CRM).

FIG. 16 shows one exemplary circuit for a buck-boost converter in fixed frequency discontinuous conduction mode (DCM).

FIG. 17 shows two exemplary waveforms illustrating operation of the converter circuit of FIG. 15.

FIG. 18 shows one exemplary circuit for generating the gate driving signals for the circuit of FIG. 15.

FIG. 19 shows two exemplary equations that define operation of the circuit of FIG. 15.

FIG. 20 shows one exemplary two-stage adaptable switching-capacitor topology.

### DETAILED DESCRIPTION OF THE FIGURES

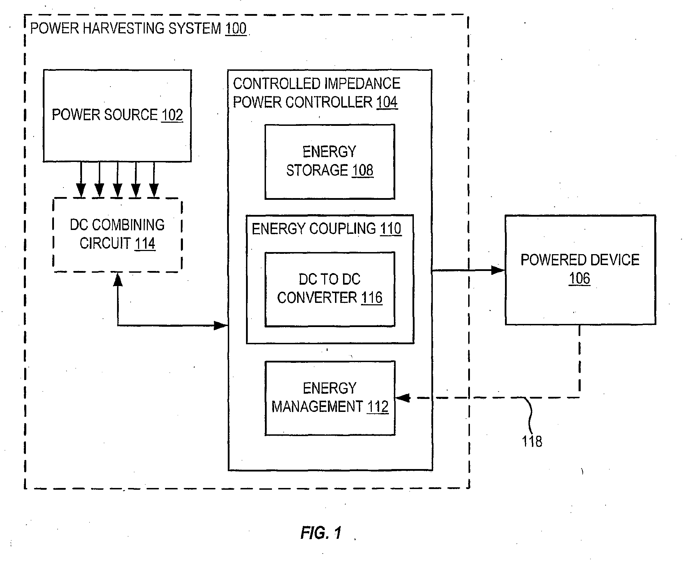

FIG. 1 shows a power harvesting system 100 that includes power sources 102 and a controlled impedance, voltage or current power controller 104. Power harvesting system 100 is illustratively shown powering a powered device 106. Powered device 106 is, for example, a sensor and/or transceiver device. Power source 102 may represent one or more of: a rectenna, a photovoltaic cell, a piezoelectric device or other power collecting device.

Power controller 104 is illustratively shown with energy storage 108, energy coupling 110 and energy management 112. Energy_storage 108 is for example a battery or a capacitor; it may be internal to power controller 104, as shown, or external to power controller 104 without departing from the scope hereof

Energy management 112 instructs energy coupling 110 to convert energy received from power source 102 into a form suitable for storage by energy storage 108. Accordingly, energy coupling 110 may include a DC-to-DC voltage converter 116 that changes the DC voltage received from power source 102 such that it is suitable for storage in energy storage 108. The DC-to-DC voltage converter 116 may represent a step-up voltage converter or a step down voltage converter. Or, DC-to-DC voltage converter 116 may include a plurality of different types of DC-to-DC voltage converters that are selectively chosen to convert DC electricity received from power source 102 into a form suitable for storage by energy storage 102.

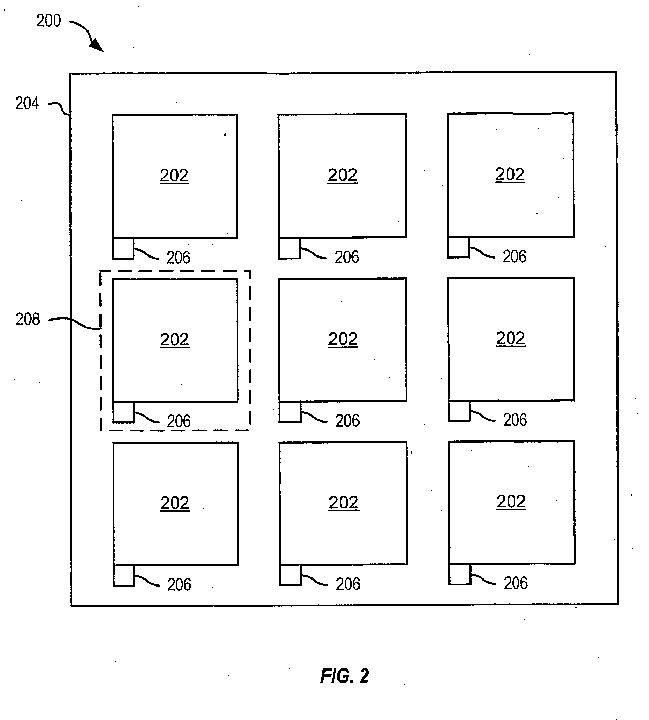

Energy coupling 110 is further shown with optional DC combining circuit 114, which operates to combine DC inputs from power source 102 where multiple power sources 102 provide power to controlled impedance power controller 104. DC combining circuit 114 may include one or more switches selected by energy management 112 to configure connectivity of multiple power sources 102. For example, where power source 102 is a rectenna array (e.g., rectenna array 200, FIG. 2) that has a plurality of antenna elements (e.g., antenna elements 202), depending on sensed characteristics of received power from the aperiodic rectenna, energy management 112 may control DC coupling circuit 114 to configure antenna elements in series and/or parallel for optimum operation. In particular, as power levels, frequencies and polarizations of incident RF waves change, energy management 112 may reconfigure connectivity of the rectenna array to improve energy harvesting efficiency.

Energy management 112 may also receive information from powered device 106 via signal 118 that indicates power requirements of powered device 106. This information is used by energy management 112 to optimally configure energy coupling 110.

In the following examples, power source 102 is represented by one or more rectennas. However, other power sources may also be used in place of the rectennas shown.

FIG. 2 shows one exemplary periodic and uniform rectenna array 200, illustrating nine square patch antenna elements 202 on a grounded substrate 204. Each antenna element 202 has a rectifier 206, thereby forming a rectenna 208. Interconnectivity of periodic rectenna array 200 is not shown for clarity if illustration. Size and layout of each antenna element, connectivity of each rectifier thereto and substrate characteristics determine the frequency range and polarization of radio frequency waves received by rectenna array 200.

Array 200 may be formed with alternate antenna designs without departing from the scope hereof. Moreover, additional rectifiers may connect in parallel or series to rectifiers 206, also without departing from the scope hereof.

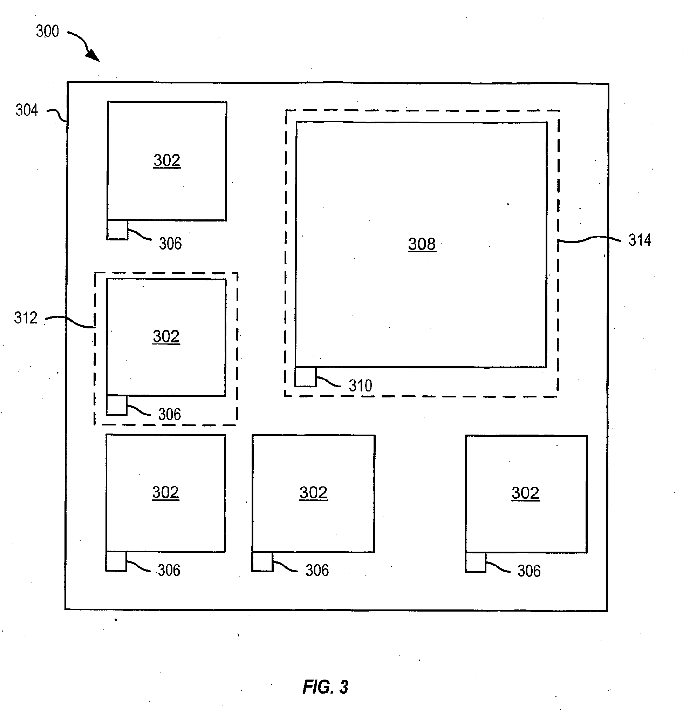

FIG. 3 shows one exemplary aperiodic and non-uniform rectenna array 300 with five patch antenna elements 302 of a first size formed on a substrate 304, each antenna element 302 having a rectifier 306 to form a rectenna 312. Aperiodic rectenna array 300 also has a patch antenna element 308 of a second size formed on substrate 304; antenna element 308 has a rectifier 310 thus forming a rectenna 314. Rectenna 312 is designed for receiving radio frequency waves of a first frequency range, and rectenna 314 is designed for receiving radio frequency waves of a second frequency range. Thus, the aperiodic and non-uniform rectenna array 300 may receive radio frequency waves within both the first frequency range and the second frequency range.

Additional or different rectennas may be included within array 300. Size, layout and type of each antenna element, connectivity of each rectifier thereto determine the frequency range and polarization of radio frequency waves received by aperiodic non-unifonn rectenna array 300.

Although not shown in FIGs. 2 and 3, connectivity of rectennas 208 within periodic rectenna array 200 and connectivity of rectennas 312 and 314 within aperiodic rectenna array 300 maybe based upon radio frequency waves incident at each rectenna array and the desired power output of the rectenna array. For example, rectennas 208 may be connected in series or parallel.

Selection of a suitable rectifier topology and rectification device, based upon frequency range and power levels received, is also important for efficient operation of these rectenna arrays.

Multiple periodic or aperiodic, uniform or non-uniform, rectenna arrays may be used to harvest RF energy. For example, output from two periodic rectenna arrays, each having different sized antenna elements (i.e., each receiving RF waves of different frequency ranges and/or polarizations) may be combined for conditioning by controlled impedance (or DC input parameter) power controller 104, FIG. 1.

A rectenna array (e.g., periodic rectenna array 200, FIG. 2) may also be reconfigured during operation. For example, if energy management 112 determines that output of rectenna array 200 is low, energy management 112 instructs energy coupling 110 to modify connectivity of rectenna array 200 (e.g., using DC combining circuit 114) to increase output voltage. DC combining circuit 114 for example contains switching components (e.g., MOSFETs, BJT, IGBT, relays, etc.) that allow dynamic configuration of connectivity to power source 102.

If energy management 112 determines that output power of the rectenna array is high, energy management 112 may instruct energy coupling 110 to reconfigure antenna elements of rectenna array 200 into parallel and/or serial connectivity combinations, thereby reducing changing output voltage and current.

Connectivity of one or more rectenna arrays is for example based upon one or more of output voltages, open circuit voltage, short circuit current, output current and output power of one or more antenna elements. Groups of antenna elements producing similar currents may be connected in serial, whereas groups of antenna elements producing similar voltages may be connected in parallel. Operating parameters of the power controller 104 may also be based upon one or more of output voltages, open circuit voltage, short circuit current, output current and output power of one or more antenna elements and / or, other power sources.

Controlled impedance power controller 104 may include one or more sense circuits for monitoring characteristics of input power.

The rectenna array may be designed such that RF power from two or more antenna elements are combined before rectification.

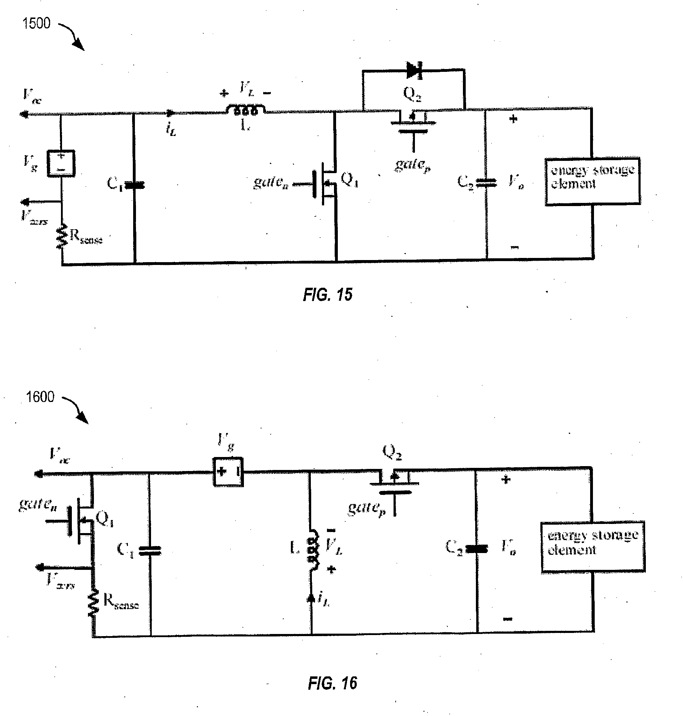

FIGs. 15, 16 and 18, described below, show exemplary circuits for presenting desired impedance to one or more power sources (e.g:, power source 102, FIG. 1, periodic rectenna array 200, FIG. 2, and aperiodic rectenna array 300, FIG. 3). Prior art DC-to-DC converters typically implement inverse resistive loading: as input power decreases, resistance presented to the input power source is reduced, thereby further loading the input source. Controlled impedance power controller 104, on the other hand, maintains resistance presented to the input source at a substantially constant level, even as input power levels vary. The controlled impedance may also be varied based on sensed conditions of the power source to emulate a desired impedance, input voltage or input current in order to improve the energy harvesting efficiency, for example by emulating a positive resistance load where resistance presented to the source increases as input power decreases.

Selection of circuitry for power controller 104 depends on the desired application. Where high efficiency of energy harvesting is required, additional circuitry may be included to sense characteristics of the input power, whereas if the power source provides ample power, high efficiency may not be necessary, allowing simplified circuitry to be used.

Alternative power sources may be combined for use with an RF power source 102. For example, an RF wave rectenna array, a mechanical generator and a photovoltaic cell may be used as input to combining circuit 114 and power controller 104. Power controller 104 may then dynamically configure these inputs depending on sensed input characteristics and/or desired output requirements in order to improve energy harvesting efficiency. In particular, energy sources may be combined in such a way as to provide biasing to each other, thereby increasing overall energy harvesting efficiency. Optionally, powered device 106 may provide feedback to energy management 112 to indicate its power needs. Energy management 112 may then configure power input connectivity as needed to provide the necessary power.

Power controller 104 may also transfer energy from energy storage 108 to one or more power source 102 outputs in order to increase the overall energy harvesting efficiency. For example, energy can be transferred to the DC output of a rectenna for improved biasing, resulting in improved energy harvesting efficiency.

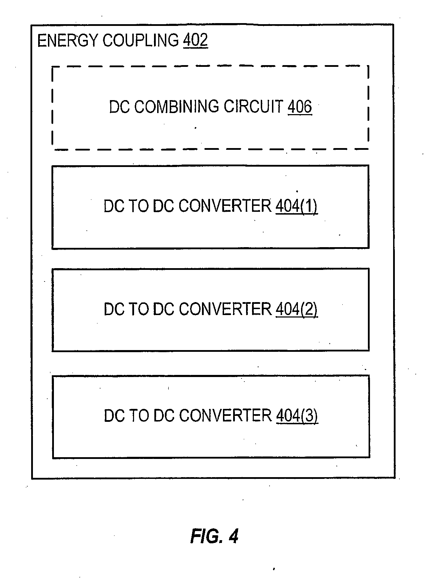

Where input power conditions vary, DC-to-DC converter 116 may be selected from a plurality of converters to match the input power characteristics. FIG. 4 shows one exemplary energy coupling 402 that includes a plurality of DC-to-DC converters 404 and an optional DC combining circuit 406. DC combining circuit 406 may represent DC combining circuit 114, FIG. 1. Energy coupling 402 may represent energy coupling 110, FIG. 1. For example, each of DC-to-DC converters 404 may represent one of: a four-switch buck-boost converter, a two-switch buck-boost converter, a boost converter operating in critical-conduction mode, a buck converter controlled to regulate input current or voltage as a function of the corresponding input voltage or current, and a switched capacitor converter. DC-to-DC converters 404 are selectable based upon input power characteristics and the type of storage device used for energy storage 108. As input power characteristics change, energy management 112 may select an alternate DC-to-DC converter as needed.

Where input power conditions vary, energy management 112 may change the operating characteristics of DC to DC converter 116 to match the emulated input impedance of the converter to the desired load of the power source 102. For example, based upon one or more of: sensed open circuit voltage of power source 102, short circuit current of power source 102, operating voltage and current of power source 102, and output power of power source 102, characteristics of DC to DC converter 116 may be adjusted to emulate an appropriate resistance.

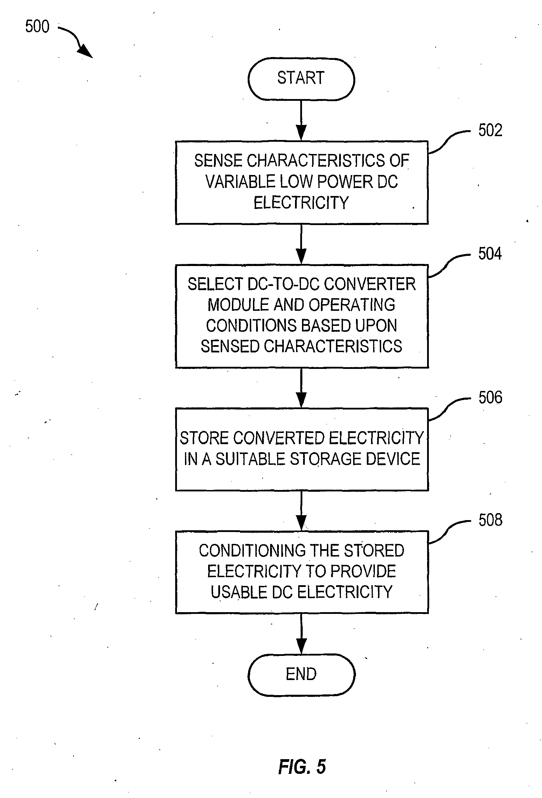

FIG. 5 is a flowchart illustrating one process 500 for converting variable power DC electricity into usable DC electricity. Process 500 is for example performed by controller 104, FIG. 1. In step 502, process 500 senses characteristics of the variable low power DC electricity and then selects, in step 504, a DC-to-DC converter module and operating characteristics based upon the sensed characteristics, to convert the variable power DC electric into electricity suitable for storage. In step 506, electricity suitable for storage is stored. For example, the electricity may be stored in energy storage 108, FIG. 1. The stored energy is then conditioned into the usable electricity. For example, the energy from energy store 108 is conditioned and provided as DC electricity to powered device 106.

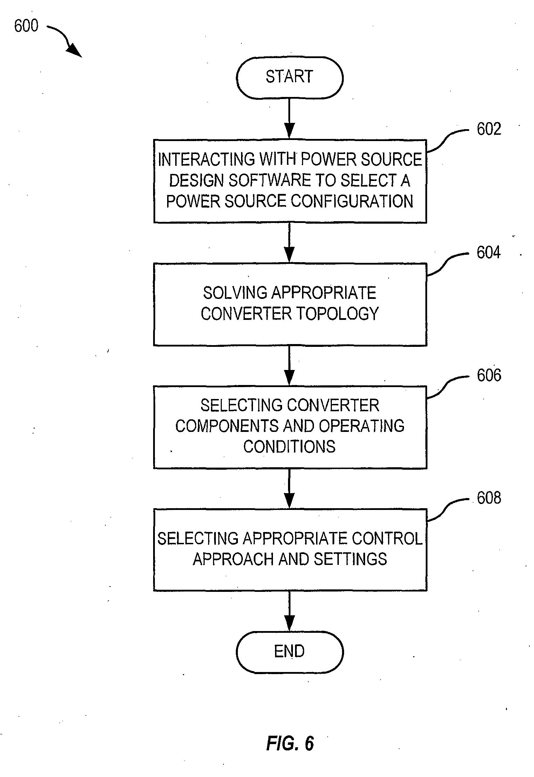

FIG. 6 is a flowchart illustrating one process 600 for designing a system for harvesting energy from a power source. In step 602, process 600 interacts with power source design software to select a power source configuration. In step 604, process 600 solves the appropriate converter topology. In step 606, process 600 selects the converter components and operating conditions. In step 608, process 600 selects the appropriate control approach and settings.

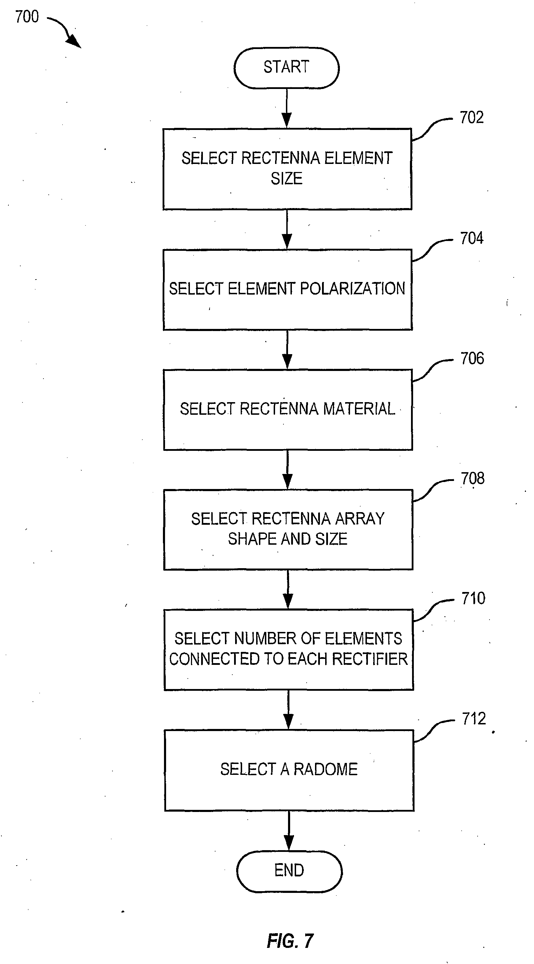

FIG. 7 is a flowchart illustrating one process 700 for designing a rectenna. In step 702, process 700 selects the element size of the rectenna based upon available area, incident radiation power levels and operating frequency range. In step 704, process 700 selects element polarization based upon the RF environment of operation. In step 706, process 700 selects rectenna material based upon propagation medium and frequency range. In step 708, process 700 selects a shape and size for the rectenna array based upon required output power levels, available power storage, operational duty cycles and available space. In step 710, process 700 selects a radome appropriate for intended use.

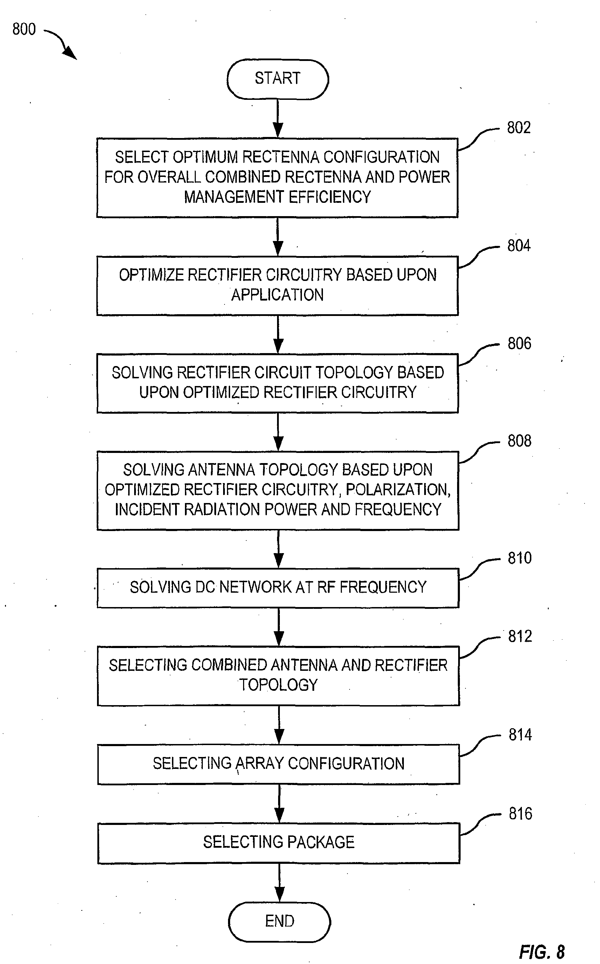

FIG. 8 is a flowchart illustrating another exemplary process 800 for designing a rectenna. In step 802, process 800 uses power management design software to interactively select optimum rectenna configuration for overall combined rectenna and power management efficiency. In step 804, process 800 optimizes the selected rectenna circuitry based upon application. In step 806, process 800 solves rectifier circuit topology based upon optimized rectifier circuitry. In step 808, process 800 solves antenna topology based upon optimized rectifier circuitry, polarization, incident radiation power level and frequency using full-wave electromagnetic simulations. In step 810, process 800 solves the DC network at RF frequencies using a combination of full-wave electromagnetic and high-frequency circuit simulations. In step 812, process 800 selects combined antenna and rectifier topology. In step 814, process 800 selects appropriate rectenna array configuration. In step 816, process 800 selects an appropriate package for integration with power manager based upon simulation of package for RF compatibility.

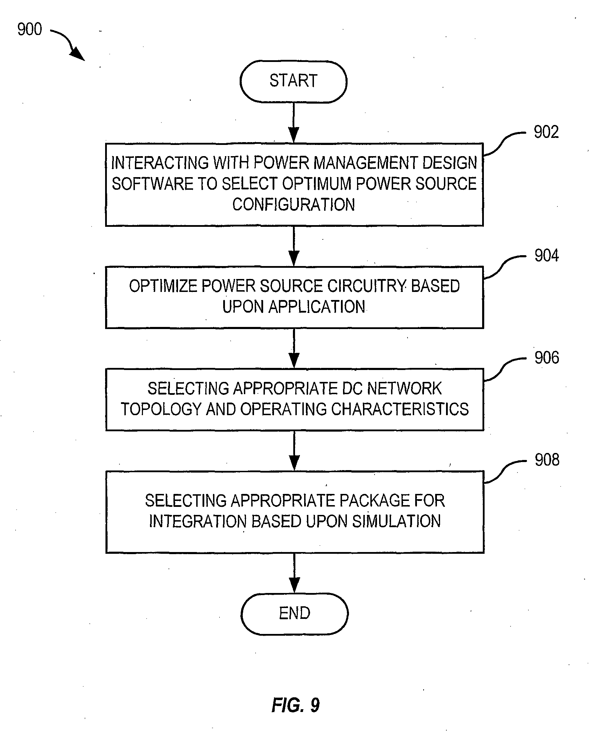

FIG. 9 is a flowchart illustrating one process 900 for designing a system for harvesting energy from power sources. In step 902, process 900 interacts with power source design software to select one or more desired power sources for overall combined power source and power manager efficiency. In step 904, process 900 solves appropriate converter topology. In step 906, process 900 selects converter components and operating conditions for maximum efficiency based upon selected power source configuration and output characteristics over designated incident power characteristics. In step 908, process 900 selects an appropriate control approach and settings for maximum overall system efficiency over given system characteristics.

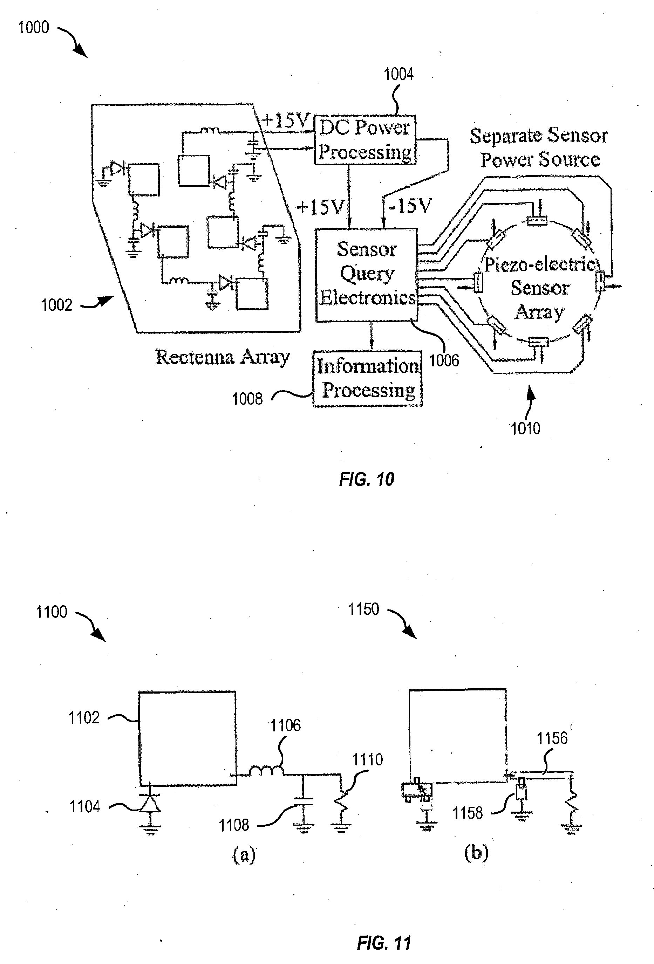

FIG. 10 shows a block diagram of one exemplary rectenna and sensor system 1000. In particular, system 1000 has a rectenna array 1002, DC power processing 1004, sensor query electronics 1006, information processing 1008 and a piezoelectric sensor array 1010. In one example, system 1000 is used to sense structural failures from fatigue within an aircraft. Rectenna array 1002 is formed on a flexible substrate that may be conformed to a moderate curve of an aircraft.

FIG. 11 shows an exemplary model 1100 and a layout 1150 of an ADS rectenna 1101. Model 1100 is shown with an antenna 1102, a diode 1104, an inductor 1106, a capacitor 1108 and a resistor 1110. As shown in layout 1150, a commercial lumped element capacitor 1158 representing capacitor 1108 and a small 0.24mm diameter wire 1156 representing inductor 1106 provide necessary impedance for an output filter of rectenna 1101. Output voltage of rectenna 1101 is measured across a variable resistor and the DC power is calculated as V²/R.

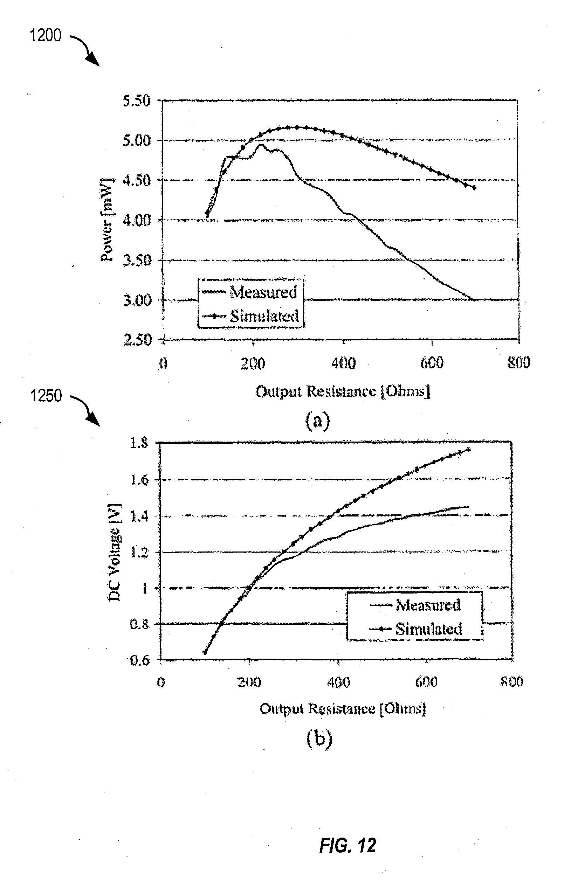

FIG. 12 shows an exemplary graph 1200 illustrating simulated and measured output power of rectenna 1101 as a function of output resistance, and an exemplary graph 1250 illustrating simulated and measured output voltage of rectenna 1101 as a function of output resistance.

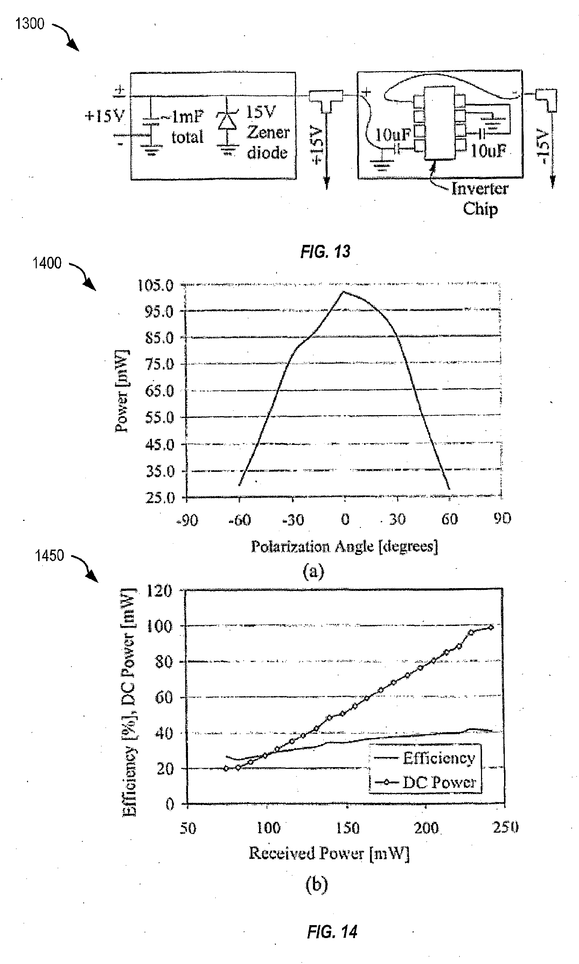

FIG. 13 shows a block diagram illustrating one exemplary DC power processing circuit 1300 for obtaining plus and minus 15V power. Circuit 1300 is powered, for example, by an array of rectenna 1101, FIG. 11, not shown.

FIG. 14 shows one exemplary graph 1400 illustrating measured DC output power of circuit 1300 against polarization angle of incident radiation against the rectenna array and one exemplary graph 1450 illustrating DC output power and efficiency of circuit 1300 against received power by the rectenna array.

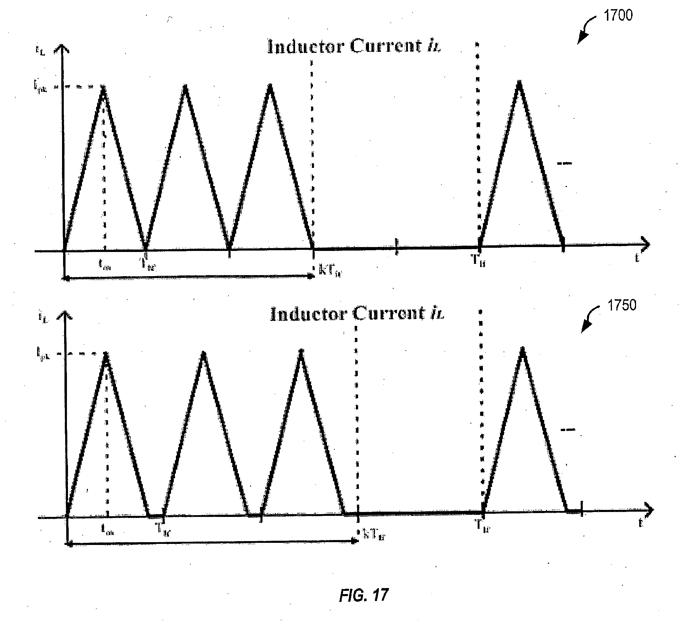

FIG. 15 shows one exemplary circuit 1500 for a boost converter in variable frequency critical conduction mode (CRM). FIG. 16 shows one exemplary circuit 1600 for a buck-boost converter in fixed frequency discontinuous conduction mode (DCM). Note that in both circuits 1500 and 1600, a two-switch implementation is possible due to the floating input power source. The converter circuits 1500, 1600 may be operated continuously at higher input power levels, or operated in a pulsed mode at lower power levels, as shown in waveforms 1700 and 1750 of FIG. 17.

In particular, waveform 1700 of FIG. 17 shows inductor current under steady-state operation of circuit 1500, FIG. 15. In a first transition of circuit 1500, transistor Q₁ is turned on and Q₂ is turned off during tₒₙ, and thus the inductor current ramps up from zero to iₚₖ over that time. After this transition, Q₁ is turned off, and Q₂ is turned on to move the energy to the load. This second transition lasts until the inductor current drops to zero. When this occurs, the first transition is repeated. The converter of circuit 1500 runs in this mode for a certain duty cycle, k, of a low frequency period, T_{lf}. At kT_{lf}, the converter turns off and starts up again at T_{lf}. By adjusting k or tₒₙ, the emulated input resistance seen by the source is changed. Changing the emulated input resistance to match the optimum rectenna load maximizes energy harvesting.

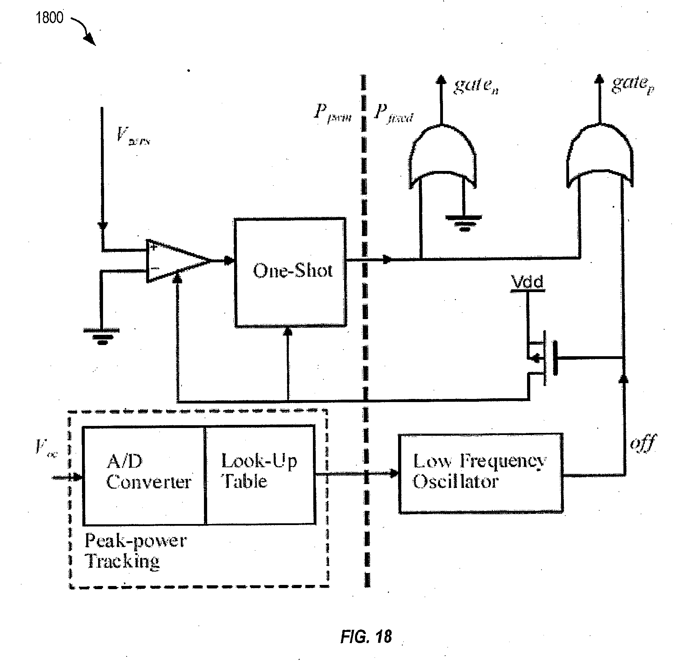

In circuit 1500, the input voltage source is shown as Vg, and the output energy is stored in an energy storage element such as a capacitor or micro-battery. The voltage, V_{zcrs}, is a sense point used by a comparator to find a zero crossing of the inductor current. Optionally, the open circuit voltage, V_{oc}, or a short circuit current, I_{sc}, may be used by additional control circuitry to find the operating input power level and set k. The gate driving signals, gateₙ and gateₚ, are essentially the same signal when the converter is operating in critical conduction mode. However, both drive their respective MOSFETs off after kT_{lf}; thus gateₙ is a low voltage signal and gateₚ is a high voltage signal. C₁ and C₂ are input and output filter capacitors. Diode Q₂ may be used to precharge the energy storage element, thus enabling start-up from zero energy. The control circuitry for this boost converter generates the gate driving signals, given the zero crossing point of the inductor current and the parameters: tₒₙ, T_{lf}., and k. This is for example achieved with the exemplary circuit 1800 shown in FIG. 18.

The voltage, V_{zcrs}, from the power stage is the positive input into a comparator with the negative input tied to ground. V_{zcrs} is a negative voltage most of the time. Detection of a zero-crossing by the comparator triggers a pulse, from a one-shot circuit, with width tₒₙ. This pulse is passed through two OR-gates and then to circuit 1500 as gateₙ and gateₚ. A second input into the gateₚ OR-gate is a signal from a low frequency oscillator that is logic high after kT_{lf}. This ensures that both Q₁ and Q₂ are off after that point. The low frequency oscillator operating at period, T_{lf}, also provides the same signal to power off the comparator and one-shot circuitry when the converter is not in operation for reduced control power loss and to power them back on afterwards.

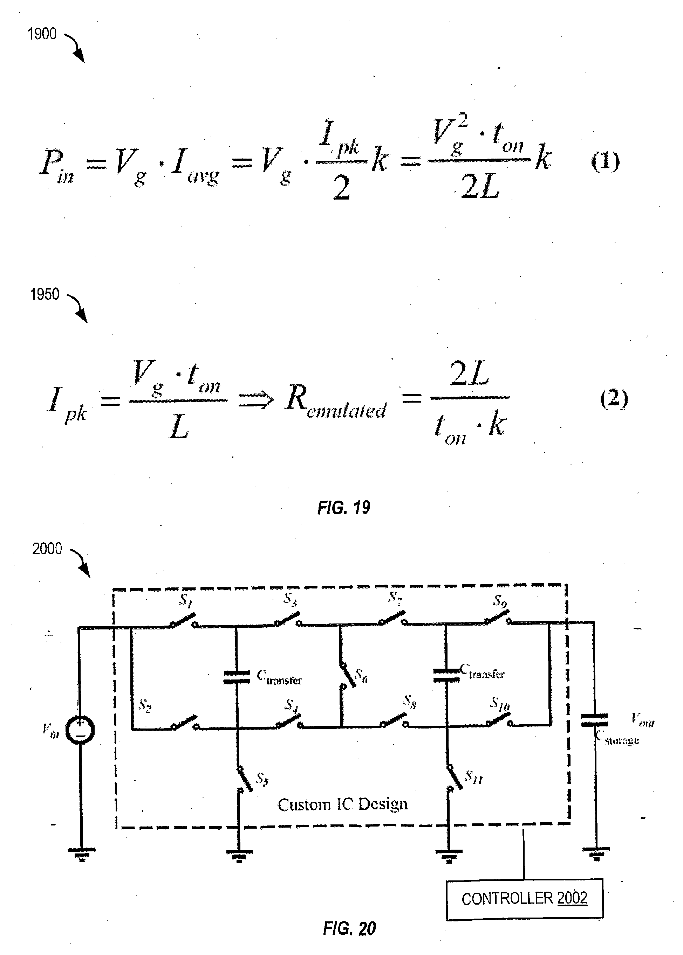

As can be seen from equation 1950, FIG. 19, if the boost converter operates continuously, the emulated resistance R_{emulated} is only be dependent on tₒₙ since k = 1. This simplifies the control circuitry since only the zero crossing detecting comparator and the one-shot are used. However, these circuits are on continuously, even at low input power. Implementation of the low frequency duty cycle control method allows some of the circuitry to be powered off at times, depending on the input power level. Note that peak power tracking components in the control sample the open circuit voltage, V_{oc}, of the input source when the converter is not in operation. These components may also sample the short circuit current, I_{sc}. These values maybe used to adjust k or tₒₙ and thus change R_{emulated} to be the optimum impedance load. If operation at lower power levels is desired, these additional control blocks may be implemented.

Prior art power converters for very low power levels have low efficiency due to parasitic leakage currents and parasitic capacitance to the substrate. These limitations are removed by developing a set of integrated converters for high efficiency energy harvesting using an RF process. This process is based on fully-depleted silicon-on-insulator (FD-SOI) with a thick upper metal layer for inductors and a high resistivity substrate. The primary advantages in this process for power processing are reduced parasitic capacitances, which are up to 1000 times lower than in a traditional CMOS silicon process. Such low parasitics facilitate high efficiency operation, even at very low power levels and frequencies as high as hundreds of kHz (allowing small component sizes). An integrated power converter IC maybe be constructed with single and two-stage switched capacitor (SC) circuits, which have high efficiency at very low power levels since parasitic capacitance is small.

FIG. 20 shows one exemplary two-stage SC topology 2000. On-chip buffers may be provided for each of the switches (S₁-S₁₁) and external control logic (e.g., controller 2002) may be used to determine the switching configuration. Topology 2000 generates eight distinct power conversion ratios from the input voltage (Vᵢₙ) to the output voltage (Vₒᵤₜ) for ratios from one third to three. The external control chip adaptively adjusts the switching frequency and topology to continuously extract maximum power from attached rectennas while storing the harvested energy to the output capacitor (C_{storage}). As the output capacitor voltage builds, the converter sequences through topologies to maintain optimal loading of the rectenna and high efficiency.

Changes may be made in the above methods and systems without departing from the scope hereof. It should thus be noted that the matter contained in the above description or shown in the accompanying drawings should be interpreted as illustrative and not in a limiting sense.

## Claims

1. A radio frequency (RF) reception device (100), comprising:
a plurality of antenna elements arranged in an array (300), each of the antenna elements (302;308) having at least one rectifier (306;310) integrated therewith to form a rectenna element (312;314), wherein the radio frequency (RF) reception device is reconfigurable, electrical conductors providing connectivity to each of the plurality of antenna elements and rectifiers and wherein selective reception of RF energy by the plurality of antenna elements is determined by size, shape, layout and substrate characteristics of the plurality of antenna elements, the device further comprising a power controller (104) adapted to reconfigure the coupling of the rectenna elements(312;314) into parallel and/or serial connectivity combinations when it determines the output power of the array is too high or too low, **characterised in that** a first set of antenna elements (302) selected from the plurality of antenna elements has a first size and wherein a second set (308) of antenna elements selected from the plurality of antenna elements has a second size wherein the first and second sizes are different.

2. The RF device of claim 1, wherein feed points of the first and second sets of antenna elements (302;308) defines polarization of the RF energy received.

3. The RF device of claim 2, wherein shape, size, spacing, substrate characteristics and ground plane proximity of the first and second sets of antenna elements (302;308) defines the frequency range of the RF energy received.

4. The RF reception device of claim 1 , wherein the antenna array (300) has three or more antenna elements with uniform spacing.

5. The RF reception device of claim 1, wherein the antenna array (300) has three or more antenna elements with non-uniform spacing.

6. The RF reception device of claim 1, wherein the antenna array (300) is configured to receive multiple polarizations.

7. The RF reception device of claim 1, wherein the first periodic or aperiodic antenna array is configured to receive multiple frequencies.

8. The RF reception device of claim 1, wherein feed points of each of the antenna elements are selected based upon desired polarization for each of the antenna elements.

9. The RF reception device of claim 1, wherein feed points of each of the antenna elements are selected based upon desired impedance of each of the antenna elements, the impedance selected to match rectifier impedance.

10. The RF reception device of claim 1, further comprising an enclosure for containing the antenna array, rectifiers and electrical conductors to allow use in biomedical implants.

11. A system for collecting and conditioning variable DC electrical power, the system comprising the RF reception device of any preceding claim (100) and further comprising: conditioning electronics for converting the variable DC electrical power to storable DC electricity, the conditioning electronics (116) presenting a desired impedance to the at least one source; and a storage device (108) for storing the storable DC electricity.

12. The system of claim 11, wherein the storage device (108) is a capacitor and the conditioning electronics vary the voltage of the storable DC electricity based upon accumulated electricity within the capacitor.

13. The system of claim 11, wherein the storage device (108) is a battery and the conditioning electronics maintain the voltage of the storable DC electricity.

14. The system of claim 11, wherein the conditioning electronics (116) comprise a first type of DC to DC converter selected from the group of: a four-switch buck- boost converter, a two-switch buck-boost converter, a boost converter operating in critical-conduction mode, a buck converter controlled to regulate input current proportional to input voltage, and a switched capacitor converter.

## Patentansprüche

1. Radiofrequenz-(RF)-Empfangsvorrichtung (100), aufweisend:
eine Mehrzahl an Antennenelementen, die in einem Array (300) angeordnet sind, wobei jedes der Antennenelemente (302; 308) mindestens einen dazu integrierten Gleichrichter (306; 310) hat, um ein Rectennen-Element (312; 314) zu bilden, wobei die Radiofrequenz-(RF)-Empfangsvorrichtung rekonfigurierbar ist, elektrische Anschlüsse eine Konnektivität an jedes Element aus der Mehrzahl der Antennenelemente und Gleichrichter schaffen, und wobei der wahlweise Empfang der RF-Energie durch die Mehrzahl an Antennenelementen durch Größe, Form, Layout und Substratkennzeichen der Mehrzahl der Antennen-elemente bestimmt ist, wobei die Vorrichtung ferner einen Leistungssteller (104) aufweist, der zum Rekonfigurieren der Ankopplung der Rectennen-Elemente (312; 314) zu Kombinationen von paralleler und/oder serieller Konnektivität bestimmt ist, wenn er feststellt, das die Ausgansleistung des Arrays zu hoch oder zu niedrig ist, **dadurch gekennzeichnet** das, ein erster Satz von Antennen-elementen (302), die aus der Mehrzahl von Antennenelementen ausgewählt sind, eine erste Größe haben, und wobei ein zweiter Satz (308) von Antennenelementen ausgewählt aus der Mehrzahl der Antennenelemente eine zweite Größe hat, wobei die erste und zweite Größe unterschiedlich sind.

2. RF-Vorrichtung nach Anspruch 1, wobei Zugangspunkte des ersten und zweiten Satzes von Antennenelementen (302; 308) eine Polarisierung der empfangenen RF-Energie definieren.

3. RF-Vorrichtung nach Anspruch 2, wobei Gestalt, Größe, Beabstandung, Substratkennzeichen und Bezugserden-Nähe des ersten und zweiten Satzes von Antennenelementen (302; 308) den Frequenzbereich der empfangenen RUF-Energie definieren.

4. RF-Empfangsvorrichtung nach Anspruch 1, wobei das Antennenarray (300) drei oder mehrere Antennenelemente mit einheitlicher Beabstandung hat.

5. RF-Empfangsvorrichtung nach Anspruch, wobei das Antennenarray (300) drei oder mehrere Antennenelemente mit uneinheitlicher Beabstandung hat.

6. RF-Empfangsvorrichtung nach Anspruch 1, wobei das Antennenarray (300) zum Empfang multipler Polarisationen konfiguriert ist.

7. RF-Empfangsvorrichtung nach Anspruch 1, wobei das erste periodische oder aperiodische Antennenarray zum Empfang multipler Frequenzen konfiguriert ist.

8. RF-Empfangsvorrichtung nach Anspruch 1, wobei Zugangspunkte eines jeden Elements der Antennenelemente ausgewählt sind basierend auf einer erwünschten Polarisierung für jedes der Antennenelemente.

9. RF-Empfangsvorrichtung nach Anspruch 1, wobei Zugangspunkte eines jeden Elements der Antennenelemente ausgewählt sind basierend auf einer gewünschten Impedanz eines jeden Antennenelements, wobei die gewählte Impedanz der Gleichrichterimpedanz entspricht.

10. RF-Empfangsvorrichtung nach Anspruch 1, ferner aufweisend ein Gehäuse zum Aufnehmen des Antennenarrays, der Gleichrichter und elektrischen Anschlüsse, um eine Verwendung in biomedizinischen Implantaten zu ermöglichen.

11. System zum Aufnehmen und Konditionieren einer variablen Gleichstromleistung, wobei das System die RF-Empfangsvorrichtung nach einem vorangehenden Anspruch (100) aufweist und ferner: Konditionier-Elektroniken zum Konvertieren der variablen Gleichstromleistung in eine speicherbare Gleichstromelektrizität, wobei die Konditionier-Elektronik (116) eine gewünschte Impedanz an die zumindest eine Quelle darstellt; sowie eine Speichervorrichtung (108) zum Speichern der speicherbaren Gleichstromelektrizität.

12. System Anspruch 11, wobei die Speichervorrichtung (108) ein Kondensator ist und die Konditionier-Elektroniken die Spannung der speicherbaren Gleichstromelektrizität variieren basierend auf der angespeicherten Elektrizität innerhalb des Kondensators.

13. System nach Anspruch 11, wobei die Speichervorrichtung (108) eine Batterie ist, und die Konditionier-Elektroniken die Spannung der speicherbaren Gleichstromelektrizität aufrechterhalten.

14. System nach Anspruch 11, wobei die Konditionier-Elektroniken (116) einen ersten Type eines Gleichstrom-Zu-Gleichstromkonvertierers umfassen, ausgewählt aus der Gruppe: ein Vierfach-Schalt-Tief-Hochsetzsteller, ein Zweischalt-Tief-Hochsetzsteller, ein Tief-Hochsetzsteller betreibbar in einem kritischen Leitungsmodus, ein Tief-Hochsetzsteller, der zum Regulieren des Eingansstromes proportional zur Eingangsspannung steuert, sowie ein geschaltener Kondensator-Konverter.

## Revendications

1. Dispositif de réception de fréquence radioélectrique (RF) (100), comprenant :
une pluralité d'éléments d'antennes agencés en un réseau (300), chacun des éléments d'antennes (302 ; 308) présentant au moins un redresseur (306 ; 310) intégrée à celui-ci pour former un élément d'antenne redresseuse (312 ; 314), dans lequel le dispositif de réception de fréquence radioélectrique (RF) peut être reconfiguré, des conducteurs électriques fournissant une connectivité à chacun de la pluralité d'éléments d'antennes et de redresseurs, et dans lequel une réception sélective de l'énergie RF par la pluralité d'éléments d'antennes est déterminée par les caractéristiques de taille, de forme, de disposition et de substrat de la pluralité d'éléments d'antennes, le dispositif comprenant en outre un régulateur de puissance (104) adapté pour reconfigurer le couplage des éléments d'antennes redresseuses (312 ; 314) en des combinaisons de connectivités en parallèles et/ou en séries lorsqu'il détermine que la puissance de sortie du réseau est trop élevée ou trop basse, **caractérisé en ce qu'**un premier ensemble d'éléments d'antennes (302) choisi parmi la pluralité d'éléments d'antennes présente une première taille et dans lequel un deuxième ensemble (308) d'éléments d'antennes choisi parmi la pluralité d'éléments d'antennes présente une deuxième taille, dans lequel les première et deuxième tailles sont différentes.

2. Dispositif RF selon la revendication 1, dans lequel les points d'alimentation des premier et deuxième ensembles d'éléments d'antennes (302 ; 308), définissent la polarisation de l'énergie RF reçue.

3. Dispositif RF selon la revendication 2, dans lequel les caractéristiques de forme, de taille, d'espacement, de substrat et la proximité du plan de masse des premier et deuxième ensembles d'éléments d'antennes (302 ; 308), définissent la plage de fréquence de l'énergie RF reçue.

4. Dispositif de réception RF selon la revendication 1, dans lequel le réseau d'antennes (300) présente trois éléments d'antennes ou plus avec un espacement uniforme.

5. Dispositif de réception RF selon la revendication 1, dans lequel le réseau d'antennes (300) présente trois éléments d'antennes ou plus avec un espacement non uniforme.

6. Dispositif de réception RF selon la revendication 1, dans lequel le réseau d'antennes (300) est configuré pour recevoir plusieurs polarisations.

7. Dispositif de réception RF selon la revendication 1, dans lequel le premier réseau d'antennes périodiques ou apériodiques est configuré pour recevoir plusieurs fréquences.

8. Dispositif de réception RF selon la revendication 1, dans lequel les points d'alimentation de chacun des éléments d'antennes sont choisis sur la base de la polarisation souhaitée de chacun des éléments d'antennes.

9. Dispositif de réception RF selon la revendication 1, dans lequel les points d'alimentation de chacun des éléments d'antennes sont choisis sur la base de l'impédance souhaitée de chacun des éléments d'antennes, l'impédance étant choisie de manière à s'adapter à l'impédance du redresseur.

10. Dispositif de réception RF selon la revendication 1, comprenant en outre une enceinte destinée à contenir le réseau d'antennes, les redresseurs et les conducteurs électriques pour permettre une utilisation dans des implants biomédicaux.

11. Système destiné à recueillir et à conditionner une puissance électrique CC variable, le système comprenant le dispositif de réception RF (100) selon l'une quelconque des revendications précédentes, et comprenant en outre : des circuits électroniques de conditionnement destinés à convertir la puissance électrique CC variable en électricité CC pouvant être stockée, les circuits électroniques de conditionnement (116) présentant une impédance souhaitée correspondant à celle D'au moins une source ; et un dispositif de stockage (108) destiné à stocker l'électricité CC pouvant être stockée.

12. Système selon la revendication 11, dans lequel le dispositif de stockage (108) est un condensateur et les circuits électroniques de conditionnement font varier la tension de l'électricité CC pouvant être stockée sur la base de l'électricité accumulée à l'intérieur du condensateur.

13. Système selon la revendication 11, dans lequel le dispositif de stockage (108) est une batterie et les circuits électroniques de conditionnement maintiennent la tension de l'électricité CC pouvant être stockée.

14. Système selon la revendication 11, dans lequel les circuits électroniques de conditionnement (116) comprennent un premier type de convertisseur CC - CC choisi parmi le groupe comprenant : un convertisseur abaisseur - élévateur à quatre commutateurs, un convertisseur abaisseur - élévateur à deux commutateurs, un convertisseur élévateur fonctionnant en mode de conduction critique, un convertisseur abaisseur commandé de manière à réguler le courant d'entrée de sorte qu'il soit proportionnel à la tension d'entrée, et un convertisseur à capacités commutées.
